# EUROPÄISCHE PATENTSCHRIFT

(11) **EP 2 412 571 B1**
(45) Veröffentlichungstag und Bekanntmachung des Hinweises auf die Patenterteilung: **15.04.2020**
(21) Anmeldenummer: 11170377.3
(22) Anmeldetag: 17.06.2011
(51) Int. Cl.: B60N 2/68

(54) **Sitzlehnenrückwand für einen Fahrzeugsitz und Verfahren zur Herstellung einer Sitzlehnenrückwand für einen Fahrzeugsitz**
Seat backrest for a vehicle seat and method for producing a seat backrest for a vehicle seat
Dossier rabattable pour siège de véhicule et procédé de fabrication d'un dossier rabattable pour siège de véhicule

(30) Priorität: 28.07.2010 DE 102010032470
(43) Veröffentlichungstag der Anmeldung: 01.02.2012
(73) Patentinhaber: Adient Luxembourg Holding S.à r.l., 1855 Luxembourg (LU)
(72) Erfinder: Röbkes, Holger, 42651 Solingen (DE); Schreier, Johann, 32694 Dörentrup (DE); Josten, Stefan, 41569 Rommerskirchen (DE); Göbel, Matthias, 51063 Köln (DE); Köver, Axel, 50859 Köln (DE)
(74) Vertreter: Liedtke, Markus

(56) Entgegenhaltungen:
- WO-A1-01/92051
- DE-A1-102006 036 935
- DE-A1-102007 041 222
- DE-U1-202004 019 560
- DE-U1-202007 009 701

## Beschreibung

Die Erfindung betrifft eine Sitzlehnenrückwand für einen Fahrzeugsitz gemäß dem Oberbegriff des Anspruchs 1. Weiterhin betrifft die Erfindung ein Verfahren zur Herstellung einer Sitzlehnenrückwand für einen Fahrzeugsitz gemäß dem Oberbegriff des Anspruchs 10.

Die Festigkeitssteigerung durch eine Verstärkung der bekannten Art wird den weiterhin steigenden Anforderungen an die Steifigkeit von Fahrzeugsitzstrukturelementen nicht mehr in allen Fällen gerecht.

Die EP 1 413 475 A2 betrifft eine Rückenlehne für einen Kraftfahrzeugsitz, wobei die Rückenlehne einen Grundkörper umfasst, der über wenigstens einen Befestigungspunkt im Wesentlichen starr mit einer Kraftfahrzeugkarosserie verbindbar ist. Dabei ist der Grundkörper ein im Wesentlichen flächiges Element, welches mindestens eine mit dem Grundkörper verbundene Versteifungsstruktur umfasst, wobei die Versteifungsstruktur einen Versteifungsrahmen und mindestens ein Versteifungselement aufweist.

Die DE 102 30 562 C1 betrifft eine Sitzbank für ein Fahrzeug mit einer kippbaren Rücklehne. Die Rücklehne ist von einer Platte gebildet. Auf der Platte ist eine Verstärkung nach Art eines Rahmens angeordnet. Die Verstärkung ist von Profilen gebildet, die an ihren Enden mit einer Gehrung versehen sind.

Die EP 1 289 794 B1 beschreibt eine Sitzbank für ein Fahrzeug, wobei die Sitzbank mit einer kippbaren Rücklehne versehen ist, die in zwei Teile aufgeteilt ist, von denen mindestens eines von einer Platte gebildet ist, auf der ein Profil angeordnet ist. Das Profil besteht aus Teilprofilen, die zusammen einen Rahmen bilden, wobei die Teilprofile einen im Wesentlichen viereckigen, einseitig offenen Querschnitt aufweisen, an dessen offener, der Platte zugewandten Seite, rechtwinklig abgewinkelte Flansche vorgesehen sind, und dass die geraden Profilabschnitte jeweils durch gerade Teilprofile gebildet sind, die in ihrer Länge stufenlos veränderlich ausgeführt sind.

Auch die DE 10 2007 041 222 A1 offenbart einen Fahrzeugsitz mit einem Stahlrahmenbereich für eine Sitzlehne und mit einem quer über eine hintere Oberfläche der Sitzlehne erstreckendes Kunststoffrahmensubstrat.

### Aufgabe

Der Erfindung liegt die Aufgabe zugrunde, eine gegenüber dem Stand der Technik verbesserte Sitzlehnenrückwand für einen Fahrzeugsitz und ein verbessertes Verfahren zur Herstellung einer Sitzlehnenrückwand für einen Fahrzeugsitz anzugeben.

### Lösung

Hinsichtlich der Sitzlehnenrückwand für einen Fahrzeugsitz wird die Aufgabe durch die im Anspruch 1 angegebenen Merkmale gelöst. Hinsichtlich des Verfahrens zur Herstellung einer Sitzlehnenrückwand für einen Fahrzeugsitz wird die Aufgabe durch die im Anspruch 10 angegebenen Merkmale gelöst.

Vorteilhafte Weiterbildungen der Erfindung sind Gegenstand der Unteransprüche.

Bei der Sitzlehnenrückwand für einen Fahrzeugsitz mit einem im Wesentlichen flächig als Platte ausgeformten Grundkörper, ist in die Platte erfindungsgemäß zumindest abschnittsweise eine Versteifungsstruktur eingebracht, welche einen übrigen ebenen Bereich der Platte vorderseitig überragt, wobei zumindest ein Verstärkungsprofil form-, stoff- und/oder kraftschlüssig zumindest an einer Oberflächenseite, insbesondere an der Frontseite der Platte in deren ebenem Bereich anordenbar ist und wobei ein Verlauf und/oder ein Querschnitt der Verstärkungsprofile, in Kombination mit dem Verlauf der Versteifungsstruktur, rechnergestützt anhand topologieoptimierter Lastpfade ausrichtbar ist. Das ermöglicht die kostengünstige Herstellung einer leichten und dennoch leistungsfähigen, insbesondere stabilen, Sitzlehnenrückwand eines Rücksitzes für ein Fahrzeug.

Die Versteifungsstruktur ist bevorzugt rippenartig und/oder verzweigt ausgeformt. Dadurch wird eine Stabilität, insbesondere eine Verwindungs- und/oder Biegesteifigkeit der Platte signifikant erhöht.

Besonders bevorzugt ist eine Mehrzahl von Verstärkungsprofilen an der Platte anordbar. Dadurch kann die Stabilität der Platte weiter erhöht werden, insbesondere ist eine Krafteinleitung und -verteilung seitlich auf der Platte auftreffender Kräfte verbessert.

In einer Ausführungsform der Erfindung weisen die Verstärkungsprofile den gleichen Querschnitt und die gleiche Materialstärke auf. Dadurch können mehrere Verstärkungsprofile vorteilhafterweise aus einem Grundmaterial hergestellt werden, wodurch eine Herstellung vereinfacht ist.

In einer bevorzugten Ausführungsform weisen die Verstärkungsprofile jeweils einen unterschiedlichen Querschnitt und/oder eine unterschiedliche Materialstärke auf. Somit können der Querschnitt und/oder die Materialstärke und daraus resultierend das Gewicht eines jeden Verstärkungsprofils an die im Betrieb auftretenden Belastungen abgestimmt und optimiert werden.

Vorteilhafterweise sind die Verstärkungsprofile geradlinig oder zumindest abschnittsweise gebogen ausgebildet, wodurch ein Verlauf der Verstärkungsprofile dem Verlauf der rechnergestützt, topologieoptimierten Lastpfade innerhalb der Sitzlehnenrückwand variabel angepasst werden kann.

Besonders vorteilhafterweise sind mehrere Verstärkungsprofile zumindest mittels eines Knotenblechs koppelbar, wodurch besonders komplexe, insbesondere verzweigte Verläufe der rechnergestützt, topologieoptimierten Lastpfade innerhalb der Sitzlehnenrückwand nachbildbar sind.

In einer weiteren vorteilhaften Ausführungsform sind in oder an den Verstärkungsprofilen Funktionselemente integrierbar oder anordbar. Dabei sind die Funktionselemente beispielsweise als Scharnierelement, Verriegelungselement oder Befestigungselement ausgebildet, so dass eine zeitsparende Produktion und anschließende Montage der Sitzlehnenrückwand ermöglicht ist.

Beim Verfahren zur Herstellung einer Sitzlehnenrückwand für einen Fahrzeugsitz wird in eine Platte erfindungsgemäß eine Versteifungsstruktur eingeprägt, wobei anschließend zumindest ein Verstärkungsprofil form-, stoff- und/oder kraftschlüssig mit der Platte verbunden wird, wobei ein Verlauf und/oder ein Querschnitt der Verstärkungsprofile, in Kombination mit dem Verlauf der Versteifungsstruktur, rechnergestützt anhand topologieoptimierter Lastpfade ausgerichtet wird. Auf diese Weise ist eine gewichtsreduzierte und verwindungssteife Sitzlehnenrückwand herstellbar, in welche vorteilhafterweise herkömmliche Funktionselemente und/oder Aufnahmen für Funktionselemente integriert sind, so dass eine zeitsparende Montage der Sitzlehnenrückwand und einer gesamten Sitzlehne ermöglicht ist.

### Figuren

Anhand der beigefügten schematischen Figuren wird die Erfindung näher erläutert.

Dabei zeigen:
- Fig. 1: eine Frontansicht einer Ausführungsform eines linken Teiles einer erfindungsgemäß ausgestatteten, geteilten Sitzlehnenrückwand für einen Fahrzeugsitz und
- Fig. 2: eine Frontansicht einer Ausführungsform eines rechten Teiles einer erfindungsgemäß ausgestatteten, geteilten Sitzlehnenrückwand für einen Fahrzeugsitz.

Einander entsprechende Teile sind in allen Figuren mit den gleichen Bezugszeichen versehen.

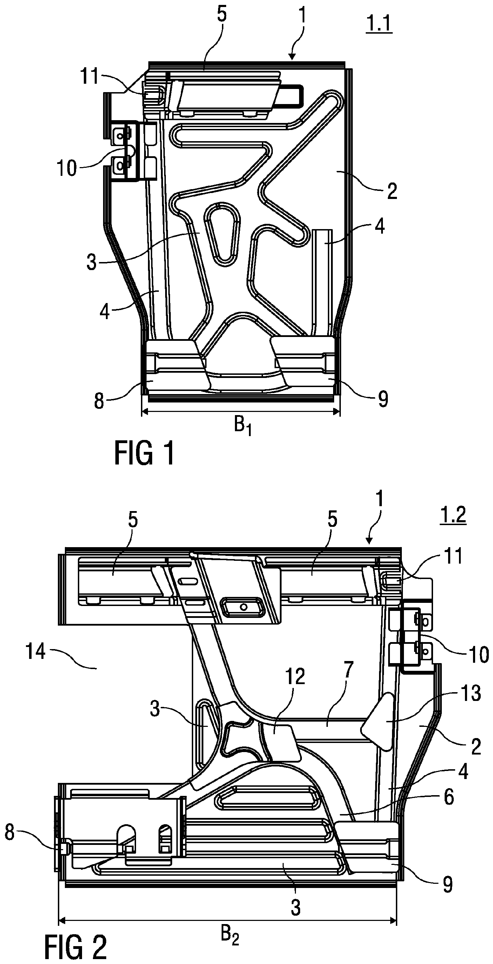

Figur 1 und Figur 2 zeigen schematisch jeweils ein Strukturelement eines linken Teiles einer geteilten Sitzlehnenrückwand 1 und eines rechten Teiles einer geteilten Sitzlehnenrückwand 1 einer nicht näher dargestellten Rücksitzkonstruktion für ein Fahrzeug. Dabei wird das Strukturelement des linken Teiles einer geteilten Sitzlehnenrückwand 1 im Folgenden als erster Sitzlehnenrückwandabschnitt 1.1 und das Strukturelement des rechten Teiles einer geteilten Sitzlehnenrückwand 1 als Sitzlehnenrückwandabschnitt 1.2 bezeichnet.

Eine solche Sitzlehnenrückwand 1 ist in herkömmlicher Weise vorzugsweise aus dem ersten Sitzlehnenrückwandabschnitt 1.1 und dem zweiten Sitzlehnenrückwandabschnitt 1.2 gebildet. Dabei kann eine Breite B₁ des ersten Sitzlehnenrückwandabschnitts 1.1 einer Breite B₂ des zweiten Sitzlehnenrückwandabschnitts 1.2 entsprechen oder eine Breite B₁ ist im Vergleich zur Breite B₂ verringert, so dass beispielweise ein asymmetrisches Teilungsverhältnis von 40% zu 60% zwischen den Sitzlehnenrückwandabschnitten 1.1 und 1.2 ausgebildet ist.

In einer nicht dargestellten Ausführungsform kann die Sitzlehnenrückwand 1 einstückig und somit ungeteilt oder unteilbar ausgebildet sein.

Der in Figur 1 gezeigte erste Sitzlehnenrückwandabschnitt 1.1 weist eine Platte 2 auf, die mit einer verzweigten Versteifungsstruktur 3 ausgeformt ist, welche einer Erhöhung der Stabilität der Platte 2 dient. Die Platte 2 ist beispielsweise als herkömmliches Blechprägeteil aus einem metallischen Werkstoff, beispielweise Stahl oder Aluminium oder einer Legierung, hergestellt. Dabei kann eine Wandstärke der Platte 2 variabel an die im Fahrzeugbetrieb auftretenden Kräfte angepasst werden. Die Versteifungsstruktur 3 ist vorzugsweise als herkömmliche, erhabene Rippenstruktur ausgebildet und kann aus zumindest einer einzelnen Rippe oder einer verzweigten Rippenstruktur gebildet werden. Dabei überragt die Versteifungsstruktur 3 die übrige Platte 2 vorzugsweise vorderseitig. Als Vorderseite der Platte 2 wird die in einem montierten Zustand der Rücksitzkonstruktion einer Sitzlehnenpolsterung zugewandte Oberflächenseite der Platte 2 bezeichnet.

An der Vorderseite der Platte 2 ist ein erstes Verstärkungsprofil 4 befestigt, welches in Form eines nach oben offenen U gebogen ist, wobei die Länge des linken vertikalen Schenkels des U etwa so groß wie die Höhe der Sitzlehnenrückwand 1 ist, wobei die Länge des rechten vertikalen Schenkels des U etwa halb so groß wie die Höhe der Sitzlehnenrückwand 1 und wobei die Breite des U etwa so groß wie die Breite des jeweiligen Sitzlehnenrückwandabschnitten 1.1, 1.2 ist. Das erste Verstärkungsprofil 4 wurde in einem flexiblen Prozess zunächst abgelängt und gebogen und anschließend mit der Platte 2 form-, stoff- und/oder kraftschlüssig verbunden und dient der Erhöhung der Stabilität, insbesondere der Verwindungs- und/oder Biegesteifigkeit der Platte 2. Am oberen Rand der Platte 2 ist mit dieser ein horizontal verlaufendes, zweites Verstärkungsprofil 5 verbunden, das ebenfalls der Erhöhung der Stabilität der Platte 2 dient. Der Querschnitt des zweiten Verstärkungsprofils 5 ist größer als der Querschnitt des ersten Verstärkungsprofils 4. Im unteren Bereich der Platte 2 sind zumindest abschnittsweise blechförmige Scharnierelemente 8 und 9 angeordnet und mit dem ersten Verstärkungsprofil 4 form-, stoff- und/oder kraftschlüssig verbunden.

Im oberen Bereich des in Richtung der Rohbaukarosserie weisenden, also in der Figur 1 linken Randes der Platte 2 ist ein Verriegelungselement 10 zur Verriegelung, d.h. form- und/oder kraftschlüssigen Koppelung der Sitzlehnenrückwand 1 mit der Rohbaukarosserie des Fahrzeugs, der Sitzlehnenrückwand 1 im Betriebszustand angeordnet.

Besonders vorteilhafterweise kann das zweite Verstärkungsprofil 5 an seinem diesbezüglichen, also in der Figur 1 linken Ende ein Befestigungselement 11 aufweisen, an welchem ein herkömmliches Rollo für eine Kofferraumabdeckung oder ein Gepäcknetz befestigbar ist.

Der in Figur 2 gezeigte zweite Sitzlehnenrückwandabschnitt 1.2 weist eine Platte 2 auf, die mit einer Versteifungsstruktur 3 ausgeformt ist, welche aus einer Mehrzahl einzelner Rippen gebildet ist. Am rechten Rand der Rückseite der Platte 2, der im eingebauten Zustand in Richtung der Rohbaukarosserie weist, ist ein im Wesentlichen geradlinig ausgeformtes erstes Verstärkungsprofil 4 befestigt. Am oberen Rand der Platte 2 ist mit dieser ein horizontal verlaufendes, rückseitiges, zweites Verstärkungsprofil 5 verbunden, das ebenfalls der Erhöhung der Stabilität der Platte 2 dient. An der Rückseite der Platte 2 sind ein drittes Verstärkungsprofil 6 und ein viertes Verstärkungsprofil 7 mit gleichem Querschnitt befestigt, welche zumindest in einem mittleren Abschnitt ihrer Längsausdehnung jeweils gebogen sind. Das dritte und vierte Verstärkungsprofil 6 und 7 wurden ebenfalls in einem flexiblen Prozess zunächst abgelängt und gebogen und anschließend zur Erhöhung der Stabilität der Platte 2 mit dieser verbunden. Der Querschnitt des dritten und vierten Verstärkungsprofils 6 und 7 ist kleiner als der Querschnitt des zweiten Verstärkungsprofils 5. Im unteren Bereich der Platte 2 sind zumindest abschnittsweise blechförmige Scharnierelemente 8 und 9 angeordnet und mit dem dritten Verstärkungsprofil 6 verbunden.

Im oberen Bereich des in Richtung der Rohbaukarosserie weisenden, also in der Figur 2 rechten Randes der Platte 2 ist ein Verriegelungselement 10 zur Verriegelung der Sitzlehnenrückwand 1 im Betriebszustand angeordnet.

Das zweite Verstärkungsprofil 5 weist an seinem diesbezüglichen, also in der Figur 2 rechten Ende ein Befestigungselement 11 analog Figur 1 auf.

Das dritte Verstärkungsprofil 6 ist mit dem vierten Verstärkungsprofil 7 mittels eines ersten Knotenblechs 12 an ihren jeweils gebogenen Abschnitten form-, stoff- und/oder kraftschlüssig verbunden. Das rechte Ende des vierten Verstärkungsprofils 7 ist mittels eines zweiten Knotenblechs 13 mit dem ersten Verstärkungsprofil 4 form-, stoff- und/oder kraftschlüssig verbunden.

Die Verläufe, also die Anordnung und die Dimensionen der Verstärkungsprofile 4 bis 7 und bevorzugt deren Kombination mit dem Verlauf der Versteifungsstruktur 3, sind entsprechend den topologieoptimierten Lastpfaden für alle relevanten Lastfälle für die Sitzlehnenrückwand 1 so optimiert und gewählt, dass eine besonders hohe Steifigkeit der Sitzlehnenrückwandabschnitte 1.1 und 1.2 in einer Großserienproduktion erzielbar ist.

Die Verstärkungsprofile 4 bis 7 sind bevorzugt auf der Seite der Platte angeordnet, in welche die erhaben ausgeformte Versteifungsstruktur 3 die Platte 2 überragt. Besonders bevorzugt sind die Verstärkungsprofile 4 bis 7 in einem Bereich der Platte 2 angeordnet, in welchem keine Versteifungsstruktur 3 angeordnet ist. Dadurch liegen die Verstärkungsprofile 4 bis 7 vollflächig auf den ebenen Bereichen der Platte 2 auf.

Die Verstärkungsprofile 4 bis 7 und die Knotenbleche 12, 13 sind vorzugsweise standardisiert ausgeformt, so dass sie für Sitzlehnenrückwände 1 unterschiedlicher Fahrzeuge verwendbar sind. Dadurch ist vorteilhafterweise eine Modularität und/oder eine Skalierbarkeit der Sitzlehnenrückwände 1 und eine Verwendung einheitlicher Verstärkungsprofile 4 bis 7 und/oder Knotenbleche 12, 13 in unterschiedlichen Sitzlehnenrückwänden 1 ermöglicht.

Nicht näher dargestellt können anstelle oder zusätzlich zu den Funktionselementen 8 bis 11 weitere Funktionselemente in den Sitzlehnenrückwandabschnitten 1.1 und 1.2 eingebracht, ausgeformt und/oder angeordnet werden. Solche Funktionselemente sind beispielsweise als herkömmliche Kindersitzbefestigungsvorrichtungen, Scharnieraufnahmebereiche, Gurtumlenkungen, Aufnahmen für Gurtschlösser, Kopfstützenhülsen, Schlossaufnahmebereiche und/oder Schlossgehäuse ausgeformt.

Die Kopfstützenhülsen sind beispielweise im oberen Bereich der Sitzlehnenrückwandabschnitte 1.1 und 1.2 derart in die jeweiligen Verstärkungsprofile 5 integriert und ausgeformt, dass in ihnen Kopfstützenstangen herkömmlicher, nicht dargestellter Kopfstützen angeordnet werden können.

Die Scharnierelemente 8 und 9 sind beispielweise randseitig im unteren Bereich der Sitzlehnenrückwandabschnitte 1.1 und 1.2 angeordnet und ermöglichen eine Schwenkbewegung der Sitzlehnenrückwandabschnitte 1.1 und 1.2 in Richtung eines nicht dargestellten Sitzkissens.

In einer besonders vorteilhaften Ausführungsform ist in einem der Sitzlehnenrückwandabschnitte 1.2 eine herkömmliche Durchladeöffnung 14 angeordnet, welche einen Transport langen Ladeguts ermöglicht. Dabei können im Bereich der Durchladeöffnung 14, beispielsweise randseitig, nicht dargestellte Scharnieraufnahmebereiche ausgebildet sein, an welchen eine nicht dargestellte Klappe schwenkbar anordenbar ist, so dass die Durchladeöffnung 14 bei Nichtgebrauch mittels der Klappe reversibel verschließbar ist.

### Bezugszeichen

- 1: Sitzlehnenrückwand
- 1.1: erster Sitzlehnenrückwandabschnitt
- 1.2: zweiter Sitzlehnenrückwandabschnitt
- 2: Platte
- 3: Versteifungsstruktur
- 4: erstes Verstärkungsprofil
- 5: zweites Verstärkungsprofil
- 6: drittes Verstärkungsprofil
- 7: viertes Verstärkungsprofil
- 8: erstes Scharnierelement
- 9: zweites Scharnierelement
- 10: Verriegelungselement
- 11: Befestigungselement
- 12: erstes Knotenblech
- 13: zweites Knotenblech
- 14: Durchladeöffnung
- B₁: Breite des ersten Sitzlehnenrückwandabschnitts
- B₂: Breite des zweiten Sitzlehnenrückwandabschnitts

## Patentansprüche

1. Sitzlehnenrückwand (1) für einen Fahrzeugsitz mit einem im Wesentlichen flächig als Platte (2) ausgeformten Grundkörper, wobei in die Platte (2) zumindest abschnittsweise eine Versteifungsstruktur (3) eingebracht ist, welche einen übrigen, ebenen Bereich der Platte (2) frontseitig überragt, wobei zumindest ein Verstärkungsprofil (4, 5, 6, 7) form-, stoff- und/oder kraftschlüssig zumindest an einer Oberflächenseite, in deren ebenem Bereich anordbar ist und wobei ein Verlauf und/oder ein Querschnitt der Verstärkungsprofile (4, 5, 6, 7), in Kombination mit dem Verlauf der Versteifungsstruktur (3), rechnergestützt anhand topologieoptimierter Lastpfade ausrichtbar ist, und wobei das mindestens eine Verstärkungsprofil (4, 5, 6, 7) in einem Bereich der Platte (2) angeordnet ist, in welchem keine Versteifungsstruktur (3) angeordnet ist und dadurch vollflächig auf dem ebenen Bereich der Platte (2) aufliegt.

2. Sitzlehnenrückwand (1) nach Anspruch 1,
**dadurch gekennzeichnet, dass** die Versteifungsstruktur (3) rippenartig und/oder verzweigt ausgeformt ist.

3. Sitzlehnenrückwand (1) nach Anspruch 1,
**dadurch gekennzeichnet, dass** eine Mehrzahl von Verstärkungsprofilen (4, 5, 6, 7) an der Platte (2) anordbar sind.

4. Sitzlehnenrückwand (1) nach Anspruch 1 oder 3,
**dadurch gekennzeichnet, dass** mehrere oder alle Verstärkungsprofile (4, 5, 6, 7) den gleichen Querschnitt und/oder die gleiche Materialstärke aufweisen.

5. Sitzlehnenrückwand (1) nach Anspruch 1, 3 oder 4,
**dadurch gekennzeichnet, dass** die Verstärkungsprofile (4, 5, 6, 7) jeweils einen unterschiedlichen Querschnitt und/oder eine unterschiedliche Materialstärke aufweisen.

6. Sitzlehnenrückwand (1) nach einem der vorherigen Ansprüche,
**dadurch gekennzeichnet, dass** die Verstärkungsprofile (4, 5, 6, 7) geradlinig oder zumindest abschnittsweise gebogen ausgebildet sind.

7. Sitzlehnenrückwand (1) nach einem der vorherigen Ansprüche,
**dadurch gekennzeichnet, dass** mehrere Verstärkungsprofile (4, 5, 6, 7) zumindest mittels eines Knotenblechs (12, 13) koppelbar sind.

8. Sitzlehnenrückwand (1) nach einem der vorherigen Ansprüche,
**dadurch gekennzeichnet, dass** in oder an den Verstärkungsprofilen (4, 5, 6, 7) Funktionselemente integrierbar oder anordbar sind.

9. Sitzlehnenrückwand nach Anspruch 8,
**dadurch gekennzeichnet, dass** die Funktionselemente als Scharnierelement (8, 9), Verriegelungselement (10) oder Befestigungselement (11) ausgebildet sind.

10. Verfahren zur Herstellung einer Sitzlehnenrückwand (1) für einen Fahrzeugsitz,
**dadurch gekennzeichnet, dass** in eine Platte (2) eine Versteifungsstruktur (3) eingeprägt wird, wobei anschließend zumindest ein Verstärkungsprofil (4, 5, 6, 7) form-, stoff- und/oder kraftschlüssig mit der Platte (2) verbunden wird, wobei das mindestens eine Verstärkungsprofil (4, 5, 6, 7) in einem Bereich der Platte (2) angeordnet ist, in welchem keine Versteifungsstruktur (3) angeordnet ist und dadurch vollflächig auf dem ebenen Bereich der Platte (2) aufliegt und wobei ein Verlauf und/oder ein Querschnitt der Verstärkungsprofile (4, 5, 6, 7), in Kombination mit dem Verlauf der Versteifungsstruktur (3), rechnergestützt anhand topologieoptimierter Lastpfade ausgerichtet wird.

## Claims

1. Seat backrest rear wall (1) for a vehicle seat, having a main body formed in a substantially flat manner as a panel (2), wherein a reinforcing structure (3) is introduced into the panel (2) at least in sections and projects over a remaining, flat region of the panel (2) on the front side, wherein at least one reinforcing profile (4, 5, 6, 7) is disposable at least on one surface side, in the flat region thereof, by a form-fit, a material bond and/or a force-fit, and wherein a profile and/or a cross section of the reinforcing profiles (4, 5, 6, 7), in combination with the profile of the stiffening structure (3), is alignable in a computer-supported manner with reference to topology-optimized load paths, and wherein the at least one reinforcing profile (4, 5, 6, 7) is disposed in a region of the panel (2), in which no stiffening structure (3) is disposed, and, as a result, rests over the full surface on the flat region of the panel (2).

2. Seat backrest rear wall (1) according to Claim 1, **characterized in that** the stiffening structure (3) is formed in a rib-like manner and/or in a branched manner.

3. Seat backrest rear wall (1) according to Claim 1, **characterized in that** a plurality of reinforcing profiles (4, 5, 6, 7) are disposable on the panel (2) .

4. Seat backrest rear wall (1) according to Claim 1 or 3,
**characterized in that** a plurality or all of the reinforcing profiles (4, 5, 6, 7) have the same cross section and/or the same material thickness.

5. Seat backrest rear wall (1) according to Claim 1, 3 or 4,
**characterized in that** the reinforcing profiles (4, 5, 6, 7) each have a different cross section and/or a different material thickness.

6. Seat backrest rear wall (1) according to one of the preceding claims,
**characterized in that** the reinforcing profiles (4, 5, 6, 7) are designed to be rectilinear or bent at least in sections.

7. Seat backrest rear wall (1) according to one of the preceding claims,
**characterized in that** a plurality of reinforcing profiles (4, 5, 6, 7) are couplable at least by means of a gusset plate (12, 13).

8. Seat backrest rear wall (1) according to one of the preceding claims,
**characterized in that** functional elements are integrable or disposable in or on the reinforcing profiles (4, 5, 6, 7).

9. Seat backrest rear wall according to Claim 8, **characterized in that** the functional elements are designed as a hinge element (8, 9), locking element (10) or fastening element (11).

10. Method for producing a seat backrest rear wall (1) for a vehicle seat,
**characterized in that** a stiffening structure (3) is embossed in a panel (2), wherein subsequently at least one reinforcing profile (4, 5, 6, 7) is connected to the panel (2) by a form-fit, a material bond and/or a force-fit, wherein the at least one reinforcing profile (4, 5, 6, 7) is disposed in a region of the panel (2), in which no stiffening structure (3) is disposed, and, as a result, rests over the full surface on the flat region of the panel (2), and wherein a profile and/or a cross section of the reinforcing profiles (4, 5, 6, 7), in combination with the profile of the stiffening structure (3), is aligned in a computer-supported manner with reference to topology-optimized load paths.

## Revendications

1. Paroi arrière de dossier de siège (1) pour un siège de véhicule comprenant un corps de base formé essentiellement à plat sous forme de plaque (2), une structure de rigidification (3) étant introduite au moins en partie dans la plaque (2), laquelle dépasse, du côté avant, d'une région plane restante de la plaque (2), au moins un profil de renforcement (4, 5, 6, 7) pouvant être disposé par engagement par correspondance de formes, par liaison de matière et/ou par force au moins au niveau d'un côté de surface, dans la région plane de celui-ci, et une allure et/ou une section transversale des profils de renforcement (4, 5, 6, 7), en combinaison avec l'allure de la structure de rigidification (3), pouvant être orientée de manière assistée par ordinateur à l'aide de chemins de charges optimisés en termes de topologie, et l'au moins un profil de renforcement (4, 5, 6, 7) étant disposé dans une région de la plaque (2) dans laquelle n'est disposée aucune structure de rigidification (3) et s'appliquant de ce fait sur toute la surface sur la région plane de la plaque (2) .

2. Paroi arrière de dossier de siège (1) selon la revendication 1,
**caractérisée en ce que** la structure de rigidification (3) est formée en tant que nervure et/ou sous forme ramifiée.

3. Paroi arrière de dossier de siège (1) selon la revendication 1,
**caractérisée en ce qu'**une pluralité de profils de renforcement (4, 5, 6, 7) peuvent être disposés au niveau de la plaque (2).

4. Paroi arrière de dossier de siège (1) selon la revendication 1 ou 3,
**caractérisée en ce que** plusieurs ou la totalité des profils de renforcement (4, 5, 6, 7) présentent la même section transversale et/ou la même épaisseur de matériau.

5. Paroi arrière de dossier de siège (1) selon la revendication 1, 3 ou 4,
**caractérisée en ce que** les profils de renforcement (4, 5, 6, 7) présentent chacun une section transversale différente et/ou une épaisseur de matériau différente.

6. Paroi arrière de dossier de siège (1) selon l'une quelconque des revendications précédentes,
**caractérisée en ce que** les profils de renforcement (4, 5, 6, 7) sont réalisés sous forme rectiligne ou au moins en partie sous forme courbe.

7. Paroi arrière de dossier de siège (1) selon l'une quelconque des revendications précédentes,
**caractérisée en ce que** plusieurs profils de renforcement (4, 5, 6, 7) peuvent être accouplés au moins au moyen d'une plaque gousset (12, 13).

8. Paroi arrière de dossier de siège (1) selon l'une quelconque des revendications précédentes,
**caractérisée en ce que** des éléments fonctionnels peuvent être intégrés ou disposés dans ou au niveau des profils de renforcement (4, 5, 6, 7).

9. Paroi arrière de dossier de siège selon la revendication 8,
**caractérisée en ce que** les éléments fonctionnels sont réalisés sous forme d'élément charnière (8, 9), d'élément de verrouillage (10) ou d'élément de fixation (11).

10. Procédé de fabrication d'une paroi arrière de dossier de siège (1) pour un siège de véhicule, **caractérisé en ce qu'**une structure de rigidification (3) est incorporée par gaufrage à l'intérieur d'une plaque (2), au moins un profil de renforcement (4, 5, 6, 7) est ensuite connecté par engagement par correspondance de formes, par liaison de matière et/ou par force à la plaque (2), l'au moins un profil de renforcement (4, 5, 6, 7) étant disposé dans une région de la plaque (2) dans laquelle n'est disposée aucune structure de rigidification (3) et s'appliquant de ce fait sur toute la surface sur la région plane de la plaque (2) et une allure et/ou une section transversale des profils de renforcement (4, 5, 6, 7), en combinaison avec l'allure de la structure de rigidification (3), étant orientée de manière assistée par ordinateur à l'aide de chemins de charges optimisés en termes de topologie.
